# EUROPEAN PATENT APPLICATION

(11) **EP 1 739 877 A1**
(43) Date of publication of application: **03.01.2007**
(21) Application number: 05757364.4
(22) Date of filing: 24.06.2005
(51) Int. Cl.: H04L 12/24, H04L 12/28

(54) **A METHOD OF REALIZING NETWORK MANAGEMENT**

(30) Priority: 24.06.2004 CN 200410049497
(71) Applicant: Huawei Technologies Co., Ltd., Longgang District, Shenzhen Guangdong 518129 (CN)
(72) Inventor: MIAO, Fuyou, Huawei Administration Building, Shenzhen Guangdong 518129 (CN)
(74) Representative: Skuhra, Udo
(86) International application number: PCT/CN2005/000918
(87) International publication number: WO 2006/000161

(57) **Abstract**

The present invention discloses a method for implementing network management, acquiring network information from the resource manager of the bearer control layer, and then carrying out network management based on the acquired network information and by employing the data transmission between the resource manager and network nodes. By employing the existing resource manager of the bearer control layer and configuring a network management interface on the resource manager, the present invention simplifies such network management as network/service configuration management, accounting management, security management, fault management, and performance management. As the communications protocol between the resource manager and each network node is able to provide high-quality configuration service, the configuration of network node by this communications protocol is highly reliable and complete.

## Description

### Field of the invention

The present invention relates to network management techniques, and more specifically to a method for implementing network management based on an independent bearer control layer.

### Background of the invention

Along with the fast development of Internet technology, the scale of Internet is continuously extending, and network management becomes increasingly important to guarantee the efficiency and reliability of network operation. Meanwhile, how to simply, comprehensively as well as effectively manage the network in order has become an important issue in network management.

As defined by the model of ITU-T TMN (International Telecommunications Union-Telecommunication Telecommunication Management Network), network management is divided into four layers, i.e. element management layer, network management layer, service management layer, and business management layer. Generally, element management layer provides performance management to various communication devices in the network, such as routers, switches, gateways, and servers; network management layer provides the management of network flow, flow direction, use rate of bandwidth, and response performance; service management layer provides the management of access service, Voice over IP (VoIP), and other value-added services; business management layer provides the management of commercial applications.

A specific network management system may include one or more management layers mentioned above depending on specific network demands. Generally, the network management system of a large-scale network includes not only the element management layer, but also the network management layer and service management layer for the entire network, and the network management layer and service management layer are the emphasis of the current network management. Therefore, network management mentioned hereinafter refers, in particular, to network management of network and service management layer.

Generally, the network management layer and service management layer are above the element management layer, and the network/service management layer exchanges data with the element management layer through northbound interface of the element management layer to provide resource and service management to the entire network.

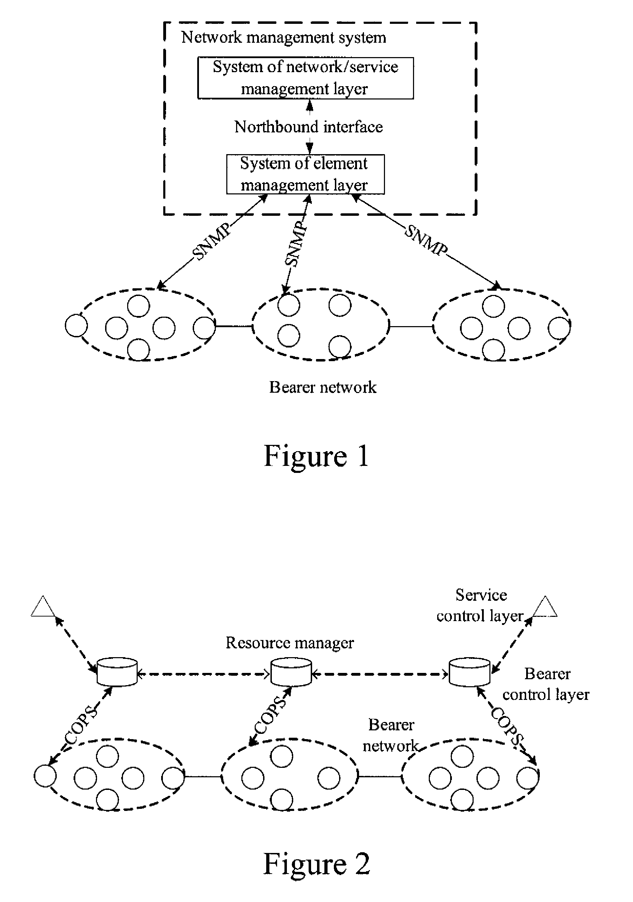

The method of network management in the prior art is hereinafter described with reference to Figure 1, which shows a structure of network management. The system of element management layer in network management system shown in Figure 1 collects information of devices in nodes of a bearer network through Simple Network Management Protocol (SNMP) and submits the collected information to the system of network/service management layer through the northbound interface. The system of network/service management layer makes analysis of the device information submitted by the system of element management layer and draws up the network topology. The personnel of network management modify the network topology through the system of network/service management layer depending on specific service demands and issue the modified network topology to the system of element management layer. The system of element management layer generates network management commands based on the modified network topology and sends the commands to the corresponding network nodes through SNMP.

On one hand, since there are various devices in the network, such as network devices of various types and various models provided by different manufacturers, there may exist, correspondingly, various systems of element management layer and various northbound interfaces, which means that the system of network/service management layer has to interact with various northbound interfaces, leading to inevitably complicated implementation of the system of network/service management layer. On the other hand, since the system of element management layer manages network elements by means of SNMP, which is a simple connectionless protocol without a processing mechanism of distributed transaction. When configuring multiple network devices to cooperatively implement a function, this protocol is unable to restore to the original state in case of a failure at one point, i.e., the assigned resources can not be released, and failure testing and subsequent processing can only be performed by specific applications. Therefore, the reliability of network management can not be guaranteed due to the features of SNMP.

### Summary

The present invention provides a method and system for implementing network management to simplify the network management and improve the reliability of network management

The method for implementing network management comprises:
acquiring network information from a resource manager of a bearer control layer by a network management system;
carrying out network management by the network management system according to the acquired network information and by means of data transmission between the resource manager and network nodes.

The step of acquiring network information comprises:
configuring a network management interface on the resource manager for exchanging the network information with the network management system;
acquiring the network information from the resource manager via the configured network management interface by the network management system.

The step of carrying out network management according to the acquired information comprises:
processing the acquired network information by the network management system according to specific demands of network management, and transmitting the processed network information to the resource manager via the configured network management interface;
generating network management commands by the resource manager based on the processed network information, and issuing the generated network management commands to appropriate network nodes via interfaces between the resource manager and the network nodes.

The processing network information comprises at least one of: adding new network information, modifying the network information, and deleting the network information.

The bearer control layer is an independent bearer control layer in the Differentiated Services (Diff-Serv) model.

The network information comprises the network information stored in the resource manager and/or the network information stored in each network node and acquired by the resource manager.

The network information comprises at least one selected from the group consisting of information related to label switched paths, requesting information of Quality of Service (QoS), routing information, or information related to the network resource status, or combination of any of the above.

The network management comprises at least one selected from the group consisting of network or service configuration management, accounting management, security management, fault management, or performance management.

The data transmission on the network management interface adopts the Simple Network Management Protocol (SNMP).

As can be seen from the above technique solution of the present invention, network information is acquired directly from the resource manager, and processed before being returned to the resource manager; then network management commands are issued via the resource manager to the network nodes controlled by the resource manager. Therefore, it is possible to avoid acquiring information from the systems of element management layer which may be configured with different northbound interfaces, thereby simplifying network management. Moreover, when configuring a specific network node, it is the interface between the resource manager and the network node that is employed to implement the configuration. As the present interface adopts the Common Open Policy Service (COPS) protocol with high reliability, the reliability of network management is greatly improved.

### Brief description of the drawings

Figure 1 is a schematic diagram illustrating a structure of network management system in the prior art.
Figure 2 is a schematic diagram illustrating a network model with an independent bearer control layer,
Figure 3 is a schematic diagram illustrating a structure of realizing network management based on an independent bearer control layer.
Figure 4 is a flowchart of the method for implementing network management in accordance with an embodiment of the present invention.
Figure 5 is a flowchart for implementing the Label Switched Paths (LSP) configuration in accordance with an embodiment of the present invention.

### Detailed description of preferred embodiment

A further detailed description of the invention is hereinafter given with reference to the accompanying drawings and a specific embodiment.

According to an embodiment of the present invention, network information is obtained as required from a resource manager of a bearer control layer, and network management is implemented based on the obtained network information.

Below is a description of the bearer control layer and resource manager.

The bearer control layer is a kind of Quality of Service (QoS) technique emerging with the expansion of Internet to guarantee the reliable transmission of key services. Taking the Differentiating Services (Diff-Serv) model put forward by Internet Engineering Task Force (IETF) as an example, the model contains an independent bearer control layer between bearer network and service control layer. Figure 2 shows the network model with an independent bearer control layer.

As shown in Figure 2, multiple resource managers are configured in the bearer control layer, and each of the resource managers has its own management domain and manages network nodes in its management domain through such protocols as Common Open Policy Service (COPS) protocol. Users' bandwidth requests and results thereof are transmitted by signaling among resource managers of different management domains.

The major functions of each resource manager include: receiving QoS requests from the service control layer, selecting paths within the network, instructing Provider Edge (PE) of network provider to assign and manage resources of access network according to the QoS requests from the service control layer, and issuing the request for creating Label Switched Path (LSP) to the bearer network.

To implement the above functions, the resource manager usually stores some relevant network information, e.g. the relevant information of all the created LSP in the management domain controlled by the resource manager, the information of QoS requests from a service, routing information, and the information of network resource status, etc. As there is such abundant information stored in the resource manager, the network management system can lay a plan of network management using such network information, and configure the network nodes through data transmission between the resource manager and the network nodes.

As can be seen from the above description of the bearer control layer and resource manager, the existing resource manager in the bearer control layer can be fully employed for the purpose of network management. Specifically speaking, the information stored in the resource manager and the data transmission procedure between the resource manager and the network nodes controlled by the resource manager can be employed for network management.

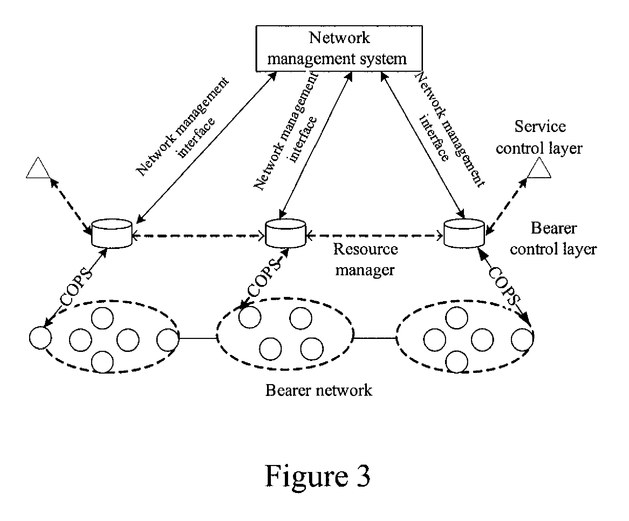

Figure 3 is a schematic diagram of a structure of realizing network management based on an independent bearer control layer. As shown in Figure 3, a network management interface is configured on each of the resource managers for exchanging network information with the network management system. Via the network management interface, the network management system is able to exchange network information with multiple resource managers in the bearer control layer.

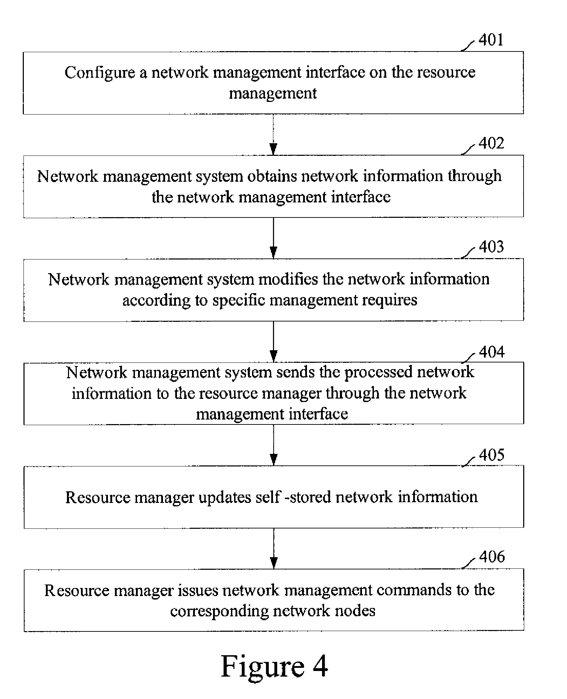

Figure 4 is a flowchart of the method for implementing network management in accordance with an embodiment of the present invention. The method is based on the structure shown in Figure 3. As shown in Figure 4, in this embodiment, the method specifically includes the steps of:
Step 401: Configure on the resource manager a network management interface for exchanging network information with the network management system. The network management interface may adopt such management protocol as SNMP.
Step 402: The network management system acquires network information from the resource manager via the network management interface on the resource manager.

It is appreciated that network information comprises not only the network information stored in the resource manager, but also the network information stored in each network node and acquired through the data transmission procedure between the resource manager and the network nodes controlled by the resource manager. As mentioned above, network information can be classified according to specific applications as information related with LSP, QoS request information, routing information and information related to the network resource status.
Step 403: The network management system performs appropriate adding, modifying or deleting processing of the acquired network information depending on various management demands, e.g., adding new network information, modifying original network information, and deleting original network information.
Step 404: The network management system sends the processed network information to the resource manager via the network management interface on the resource manager.
Step 405: The resource manager updates the self-stored network information according to the processed network information issued by the network management system.
Step 406: The resource manager generates network management commands based on the processed network information, issues the network management commands to the corresponding nodes via the interface between the resource manager and the network nodes. As mentioned above, the interface between the resource manager and network nodes may adopt the COPS protocol.

For example, the resource manager issues the network information modified by the network management system to the bearer network via the network management interface to carry out the management of network configuration.

As can be seen from the above procedure, the network management system acquires network information directly from the resource manager, and the procedure of data transmission between the resource manager and network nodes is employed by the resource manager in the procedure of issuing network management commands to the network nodes. In this way, the embodiment of the present invention makes it possible to avoid the interaction between the system of network management layer and various northbound interfaces on the systems of element management layer, simplifying the procedure of issuing management commands by the network management system.

Moreover, as COPS protocol is adopted by the resource manager to manage the network nodes in the management domain controlled by the resource manager, when the resource manager performs service configuration operation on multiple network nodes, the integrity of the service configuration operation on multiple network nodes can be guaranteed due to the characteristics of the COPS protocol itself, thereby realizing reliable network management by the network management system.

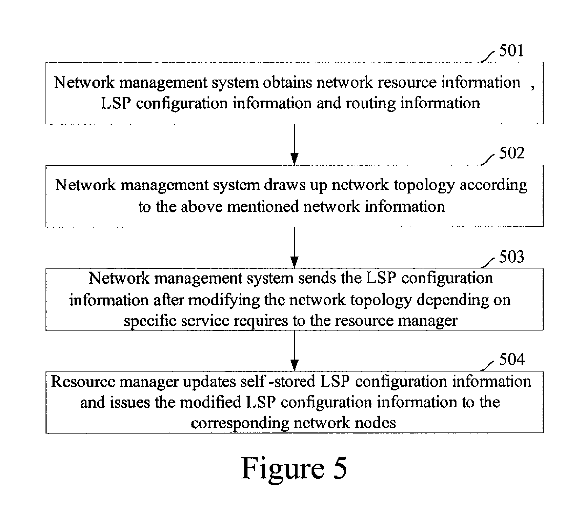

Next, a specific embodiment is given to describe in detail the method of the present invention for implementing network management by the resource manager in the bearer control layer. In this embodiment, the network management conducts the LSP tunnel configuration. As shown in Figure 5, in this embodiment, the method specifically includes the steps of:
Step 501: The network management system acquires the network resource information, LSP information, and routing information from the resource manager via the network management interface pre-configured on the resource manager.
Step 502: The network management system draws up the network topology based on the acquired network information, and displays the network information and the network topology.
Step 503: The network management system sends the LSP configuration information after the modification made by the network management person on the network topology according to specific service demands to the resource manager via the network management interface pre-configured on the resource manager.

The modification made by the network management person on LSP configuration information includes: creating a new LSP, modifying the created LSP, or deleting the created LSP.

Step 504: The resource manager updates the self-stored LSP configuration information according to the modified LSP configuration information, and issues the modified LSP configuration information to the corresponding network nodes.

The specific network management conducted in this embodiment is the management of network configuration. It is appreciated, however, that the present invention is not limited to the management of network configuration, but is applicable to accounting management, security management, fault management, performance management of the network based on various network information, etc.

In the above flowchart of the method as well as that of the embodiment of implementing LSP tunnel configuration, it is the network management interface on the resource manager that is employed for the network management system to acquire network information. It is appreciated, however, that the present invention is not limited to acquiring network information via the network management interface. Instead, the present invention comprises any proper way of acquiring network information from the resource manager, e.g., acquiring network information from the resource manager via the console or through logging on a remote log-on program.

The network management described above refers in particular to the network management layer and service management layer. It is appreciated, however, that the present invention is not limited to network management layer and service management layer. Instead, it comprises implementing the element management layer and business management layer by acquiring network information from the resource manager.

Appropriate improvement may be made in accordance with the method of the present invention in specific applications so as to meet the specific demand of specific situation. It is therefore appreciated that the specific embodiment of the present invention serves as a demonstration only and is not intended to limit the protection scope thereof.

## Claims

1. A method for implementing network management, comprising:
acquiring network information from a resource manager of a bearer control layer by a network management system;
carrying out network management by the network management system according to the acquired network information and by means of data transmission between the resource manager and network nodes.

2. The method according to Claim 1, wherein the step of acquiring network information comprises:
configuring a network management interface on the resource manager for exchanging the network information with the network management system;
acquiring the network information from the resource manager via the configured network management interface by the network management system.

3. The method according to Claim 2, wherein the step of carrying out network management comprises:
processing the acquired network information by the network management system according to specific demands of network management, and transmitting the processed network information to the resource manager via the configured network management interface;
generating network management commands by the resource manager based on the processed network information, and issuing the generated network management commands to appropriate network nodes via interfaces between the resource manager and the network nodes.

4. The method according to Claim 3, wherein the step of processing the network information comprises any of: adding new network information, modifying the network information, and deleting the network information.

5. The method according to any of Claims 1 to 4, wherein the bearer control layer is an independent bearer control layer in a Differentiated Services (Diff-Serv) model.

6. The method according to any of Claims 1 to 4, wherein the network information comprises at least one of network information stored in the resource manager and network information which is stored in each network node and acquired by the resource manager.

7. The method according to any one of Claims 1 to 4, wherein the network information comprises at least one selected from the group consisting of information related to Label Switched Path (LSP), information of Quality of Service (QoS) requests, routing information, and information related to network resource status.

8. The method according to any one of Claims 1 to 4, wherein the network management comprises at least one selected from the group consisting of network or service configuration management, accounting management, security management, fault management, and performance management.

9. The method according to any one of Claims 2 to 4, wherein the data transmission on the network management interface adopts SNMP.
